# EUROPEAN PATENT SPECIFICATION

(11) **EP 2 605 935 B1**
(45) Date of publication and mention of the grant of the patent: **02.07.2014**
(21) Application number: 11757962.3
(22) Date of filing: 15.08.2011
(51) Int. Cl.: B60P 7/08, B65H 54/58

(54) **METHOD AND DEVICE FOR WINDING UP AND STORING A BELT-LIKE OBJECT, IN PARTICULAR A TIGHTENING STRAP**
VERFAHREN UND VORRICHTUNG ZUR AUFWICKLUNG UND AUFBEWAHRUNG EINES GURTFÖRMIGEN GEGENSTANDES, IM BESONDEREN EINES SPANNBANDES
PROCÉDÉ ET DISPOSITIF POUR ENROULER ET RANGER UN OBJET DE TYPE COURROIE, EN PARTICULIER UNE SANGLE D'AMARRAGE

(30) Priority: 22.08.2010 NL 1038191
(43) Date of publication of application: 26.06.2013
(73) Proprietor: Eessy B.V., 7944 HT Meppel (NL)
(72) Inventor: VAN BENTHEM, Barend, NL-8326 BN Sint Jansklooster (NL); VAN BENTHEM, Eduard, NL-8326 BL Sint Jansklooster (NL)
(74) Representative: Mink-Lindenburg, Charlotte Hildegard
(86) International application number: PCT/NL2011/000059
(87) International publication number: WO 2012/026805

(56) References cited:
- US-A- 4 288 047
- US-A1- 2002 030 133

## Description

### Field of the invention

The invention relates to a device for winding up and storing a belt-like object, in particular a tightening strap, comprising a winding core and a drum which forms a receiving space for the wound belt-like object. The invention also relates to a method for winding up and storing a belt-like object, in particular a tightening strap, by means of such a device.

### Background of the invention

Known are tightening straps which are used to secure loads, tarpaulins and so forth on or in a vehicle. If the tightening straps are not wound up and stowed away tidily after use, they will tend to roll about through the vehicle and become entangled. For subsequent use they will then first have to be disentangled, this taking time and causing irritation. Winding up by hand without auxiliary means does however take a relatively long time and this is undesirable, particularly for professional drivers. A wound tightening strap which is not properly stowed away may moreover unwind again. Diverse means have therefore been devised for the purpose of winding and storage.

We thus find in US4266740A a winding core/reel for mounting fixedly on a truck and onto which a tightening strap can be wound by hand. In NL1004047C2 we find a winding core/reel for mounting on a truck for the purpose of winding up tightening straps. The wound strap can be taken out of the device after being wound up. In US5961263A we find a hand-operated reel for mounting on a truck for the purpose of winding up and tightening a tightening strap. In US5975454A we find a hand-operated device for winding up tightening straps comprising a winding core/reel and a handle, and optionally a hook for attachment to a truck. The wound strap can be removed after being rolled up. In CA2282200C we find a hand-operated device for mounting on a railcar for the purpose of winding up and storing a tightening strap, comprising a winding core and winder. After wind-up the winding core with winder can be removed and the tightening strap remains in the device. In USD452953S1 we find a simple device for winding up tightening straps by hand. In WO2004002862A2 we find a device for mounting on a truck for winding up tightening straps, comprising a reel driven by hand or by means of a motor. A wound tightening strap can be removed by pivoting away one (286) of two circular guide plates (286,330). In DE20016750U1 we find a device for winding up a tightening strap. The wound tightening strap remains in the device after being wound up.

Devices also forming a storage space for the wound strap are also known. We thus find in US5611520A a magazine (1) for storing the unused part of a tightening strap attached to a tightener formed by a winding core and two parallel walls (8,9). In DE19536638A1 we find a tightening strap winding automatically into a drum and automatically tightening itself, wherein the drum can be mounted fixedly on a truck. In DE29813407U1 we find a device for mounting on a truck for the purpose of winding up tightening straps, comprising a winding core (1) and a holder (4). The reel can be pulled away after winding and the wound strap can be removed. In US6109846A a tightening strap is wound up and received in a housing. During use the tightening strap can be unwound to a desired length. The strap is held tensioned by means of a spiral spring and is automatically wound up again after use. In US6290440B1 we find a drum with rotatable cover and a winding core therein for winding up a tightening strap. After wind-up the cover can be closed by rotation. In EP1153791A2 we find a storage space for a plurality of wound tightening straps with a winding mechanism. In WO2004096688A1 we find a device for manual winding up of tightening straps with storage space for a number of wound tightening straps. In US2005145747A1 we find a case with a plurality of winding cores/reels for winding up and storing tightening straps. And finally in US2002/030133A1 we find a drum with a winding core for winding up and storing therein the free outer end of a tightening strap during use.

Diverse embodiments of devices for winding up and/or storing tightening straps are thus known. These devices generally comprise a winding core or reel with a slot for attaching an outer end of the tightening strap. The winding core or reel can be rotated by hand, by means of a motor or for instance with a spiral spring. Guide means are usually provided here for guiding the strap and retaining the shape of the wound strap. The reel or winding core can be removable. After being wound up the strap can remain in the device or be removed for storage elsewhere. The device may comprise a housing partially or wholly enclosing the wound tightening strap for the purpose of storage of the wound strap. Known devices are however generally complex, expensive and susceptible to corrosion. The present invention now provides a new improved embodiment of a device and method for winding up and storing a tightening strap or other belt-like object.

### Summary of the invention

A device according to the invention comprises a winding core and a drum which forms a receiving space for the wound belt-like object, wherein the drum is provided with a first opening for passage of the winding core and wherein the drum is also provided with a second opening for passage of the belt-like object, and wherein the drum is also provided with a third opening for transverse passage of the belt-like object, the third opening connecting to the first opening and also to the second opening. A method according to the invention comprises of attaching a first outer end of the belt-like object to the winding core outside the drum and subsequently inserting the winding core into the receiving space through the first opening, wherein the belt-like object is inserted transversely through the third opening into the receiving space, and then winding the belt-like object onto the winding core, wherein the belt-like object is carried longitudinally through the second opening into the receiving space. The first outer end of the belt-like object can thus be easily attached to the winding core outside the drum, after which the winding core and the outer end of the belt-like object attached thereto can be inserted into the receiving space. The third opening in the drum makes this possible.

The belt-like object is then wound up inside the receiving space by rotating the winding core. The winding core can then be taken out of the receiving space again via the first opening, wherein the wound belt-like object remains behind in the receiving space. The wound belt-like object can thus be stored in the drum until a subsequent use. A plurality of belt-like objects can thus be stored in a plurality of drums by means of a single winding core. For a subsequent use the wound belt-like object can be taken out of the receiving space again via the second opening, for which purpose at least one part of the drum adjacent to the second opening is movable, preferably resiliently, relative to the rest of the drum.

The first outer end of the belt-like object can be attached to the winding core by insertion thereof into a slot arranged for this purpose in the winding core. The width of the slot can decrease here from a first outer end thereof toward a second outer end thereof. The first outer end of the belt-like object can thus be clamped fixedly when inserted into the slot. The first outer end of the belt-like object is preferably fixed clampingly between first mutually co-acting parts provided for this purpose extending along the slot and protruding toward the interior of the winding core, for which purpose at least one of the first protruding parts is preferably movable, preferably resiliently, relative to the winding core. This is found in practice to be a very good method of attachment.

The winding core can then be rotated by means of engaging means provided for this purpose. The engaging means can here comprise a first part connected to the winding core and a second part connected releasably to the first part. This saves storage space and cost because the whole can be stowed away more compactly in separate parts and because only a single second part is required for a plurality of first parts or winding cores. The relative position of the first part and the second part can here be adjustable so that the torque arm and the moment of torque can be varied and set as desired.

Two or more drums can be mutually coupled, for which purpose the drums are provided with coupling means preferably comprising protrusions and slots which together form a bayonet coupling. A plurality of drums can thus be coupled in simple manner and be stowed away together in orderly manner.

The engaging means are preferably provided with a third outward protruding part which extends at least along a part of the engaging means and which can be at least partially inserted into a space formed by mutually co-acting second protruding parts provided for this purpose on the drum. The engaging means can thus be mounted on the drum. When a plurality of drums are coupled, the engaging means, in this case the third protruding part, can also serve as locking for this coupling. A plurality of drums can thus be easily stowed away together with the engaging means together and in orderly manner.

All these and other aspects of the invention will be described in more detail in the following description of exemplary embodiments.

### Brief description of the figures

The invention is further elucidated hereinbelow on the basis of non-limitative exemplary embodiments. Herein:
- Figure 1a is a perspective view of a device according to the invention comprising a drum and a winding core inserted therein and provided with engaging means and a tightening strap wound onto the winding core;
- figure 1b is a perspective view of the drum; and
- figure 1c is a perspective view of the winding core with engaging means;
- figure 2 shows a number of steps forming part of wind-up of a tightening strap according to the invention;
- figure 3a is a perspective view of a winding core with engaging means according to the invention;
- figure 3b is a perspective view hereof with a tightening strap attached thereto;
- figure 3c is a front view of the winding core with engaging means; and
- figure 3d is a front view hereof with the tightening strap attached thereto;
- figure 4 shows the number of steps forming part of the coupling of two drums according to the invention; and
- figure 5 shows a number of steps forming part of mounting of the winding core with engaging means on two mutually coupled drums according to the invention.

### Exemplary embodiments of the invention

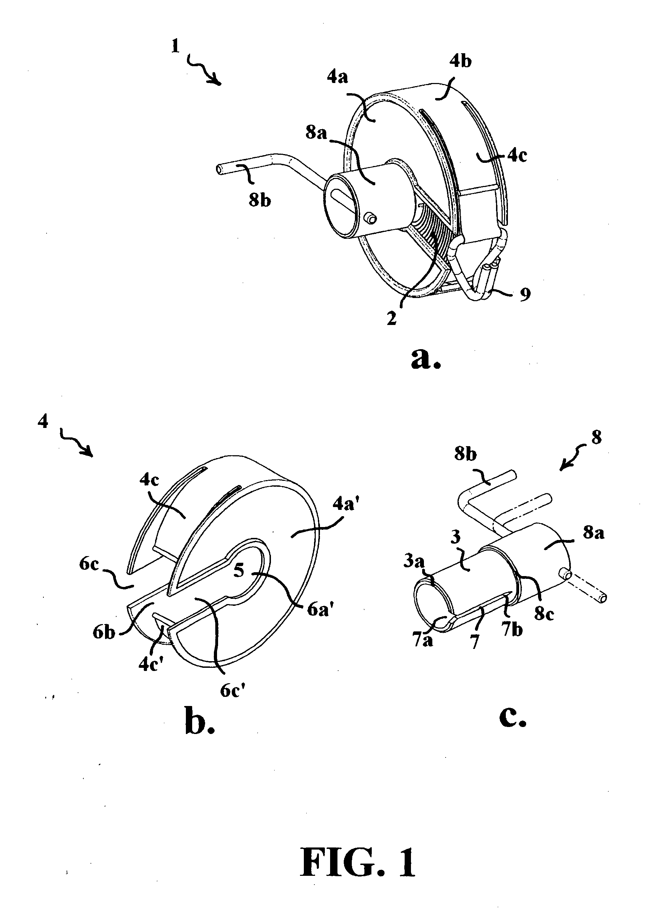

The exemplary embodiment (1) of a device according to the invention shown in figure 1 comprises a winding core (3) and a drum (4) which forms a cylindrical receiving space (5) for a tightening strap (2). Drum (4) comprises two flat circular walls (4a,4a') and a curved wall (4b). A first flat wall (4a) is provided with a central first opening (6a) for passage of winding core (3). The curved wall (4b) is provided with a second opening (6b) for transverse and/or longitudinal passage of tightening strap (2). The drum (4), in this case the first flat wall (4a), is also provided with a third opening (6c) for transverse passage of tightening strap (2). Openings (6a,6b,6c) form a continuous whole.

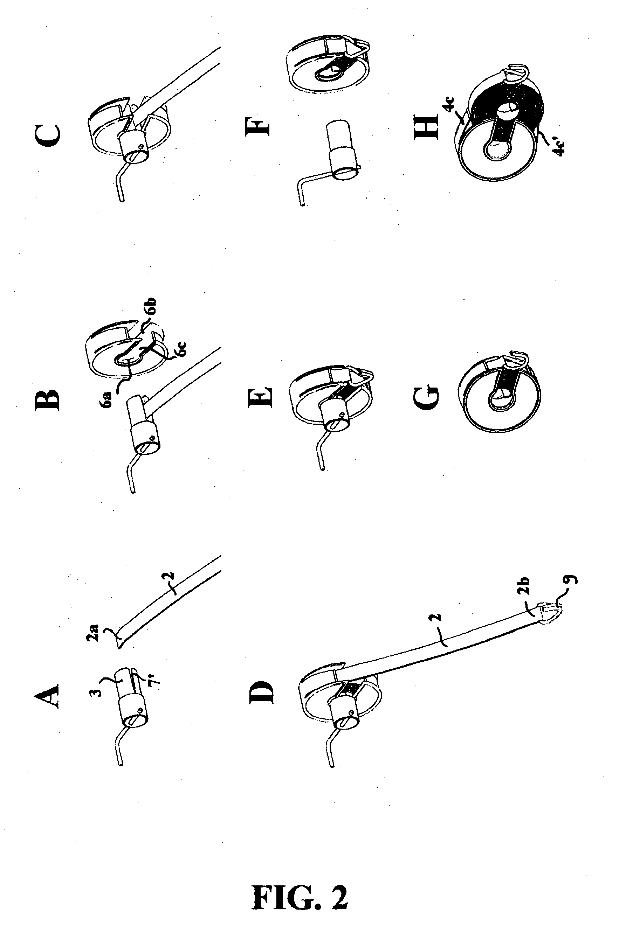

Winding core (3) is provided with a slot (7) for attaching a first outer end (2a) of tightening strap (2) to winding core (3). The width of slot (7) in the shown exemplary embodiment is not constant. At a first open outer end (7a) slot (7) is relatively wide along a short portion, this facilitating placing of the first outer end (2a) of tightening strap (2) into slot (7). Connecting thereto is a longer portion in which the width is constant. At a second closed outer end (7b) of slot (7) the width decreases again along a short portion, whereby tightening strap (2), in this case the first outer end (2a) thereof, will be clamped more or less fixedly when slid into slot (7). In another embodiment, see figure 2, the width of slot (7') decreases more or less constantly. Also possible however are embodiments with a constant or in other manner varying width of the slot.

Winding core (3) is provided with engaging means (8) for engagement during rotation, comprising a first part (8a) connected to winding core (3) and a second part (8b) connected releasably to first part (8a). First part (8a) is cylindrical and fixedly connected to winding core (3) and has a slightly larger diameter than winding core (3) so that a stop (8c) is formed. Second part (8b) is an L-shaped rod. First part (8a) is provided with recesses into which the second part (8b) can be inserted such that a type of winder (8a+8b) is formed with which winding core (3) can be rotated. Second part (8b) can be detached again from first part (8a) after use. This can save storage space and cost because the whole can be stowed away more compactly in separate parts and because only a single second part (8b) is required for a plurality of first parts (8a) or winding cores (3). The relative position of first part (8a) and second part (8b) is adjustable here, see figure 1c. The torque arm and the moment of torque and the rotation speed can thus be set as required.

Arranged in the second flat wall (4a') in the shown exemplary embodiment is a fourth opening (6a') lying opposite first opening (6a) and also a fifth opening (6c') lying opposite third opening (6c). Openings (6a',6b, 6c') once again form a continuous whole. Winding core (3) can now also be inserted as required into drum (4) from the opposite side, depending on the relative position of device (1) and the tightening strap (2) to be wound up and depending on whether the user is right-handed or left-handed. Winding core (3) is also provided with an extension (3a). After insertion of winding core (3) via one of the openings (6a,6a') provided for this purpose until the stop (8c) comes up against the relevant flat wall (4a,4a'), the extension (3a) protrudes through the relevant opposite opening (6a',6a), whereby winding core (3) is supported on two sides, and therefore better supported, during rotation.

Two parts (4c,4c') of drum (4) adjacent to second opening (6b) are movable relative to the rest of drum (4). In the shown exemplary embodiment these parts (4c,4c') are resiliently movable, although they can for instance also be connected hingedly or in other manner to the rest of drum (4). This makes it possible to take the wound tightening strap (2) out of drum (4).

During wind-up, storage and removal of the wound tightening strap (2) operation can be as follows, see figure 2. Outside the drum (4) a first outer end (2a) of tightening strap (2) is attached to winding core (3) by sliding this outer end (2a) into the slot (7') (A→B). Winding core (3) is then pushed into drum (4) (B→C) as far as the stop (3a). Tightening strap (2) is here carried transversely through the second opening (6b) and transversely through the third opening (6c). Winding core (3) is then rotated using the winder (8a+8b), wherein tightening strap (2) is carried longitudinally through second opening (6b) into receiving space (5) until the hook (9) attached to the second outer end (2b) of tightening strap (2) obstructs further winding (C→D→E). Winding core (3) can now be taken out (E→F). The wound tightening strap (2) remains behind in drum (4) and is stored there compactly and properly wound up (G). A plurality of tightening straps can thus be wound up and stored compactly in a plurality of drums using a single winding core with engaging means. For subsequent use the wound tightening strap can be pulled out of drum (4) again, wherein the movable parts (4c,4c'), which have held tightening strap (2) in the drum during storage, will with sufficient pulling force move apart to sufficient extent to allow passage of the wound tightening strap (G→H).

In contrast to what is usual, tightening strap (2) is wound up from the outer end (2a) which is not provided with the hook (9). When the wound tightening strap is thrown for instance over a car or a load while unwinding, hook (9) can be held in the hand, whereby it cannot damage the car, load or anything else.

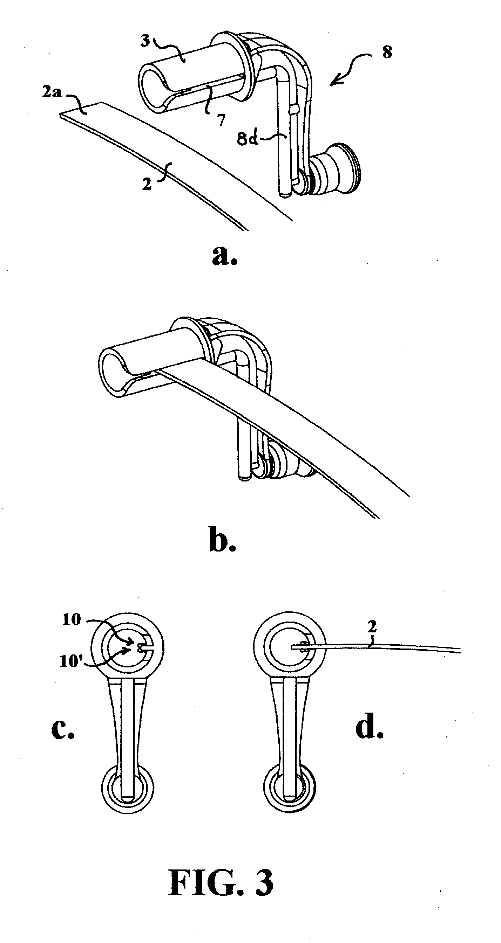

Winding core (3) and engaging means (8) can also form a more or less integrated whole, see figure 3. First outer end (2a) of tightening strap (2) is fixed clampingly here between two mutually co-acting parts (10,10') which extend along slot (7) and protrude toward the interior of winding core (3), and which in the shown exemplary embodiment are resiliently movable relative to winding core (3). This is found to work very well and easily in practice.

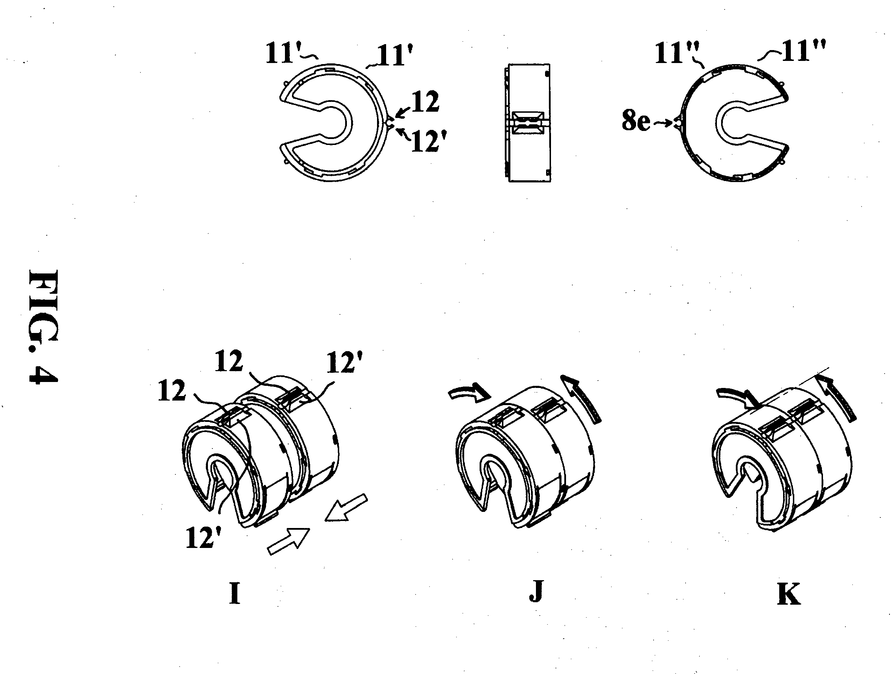

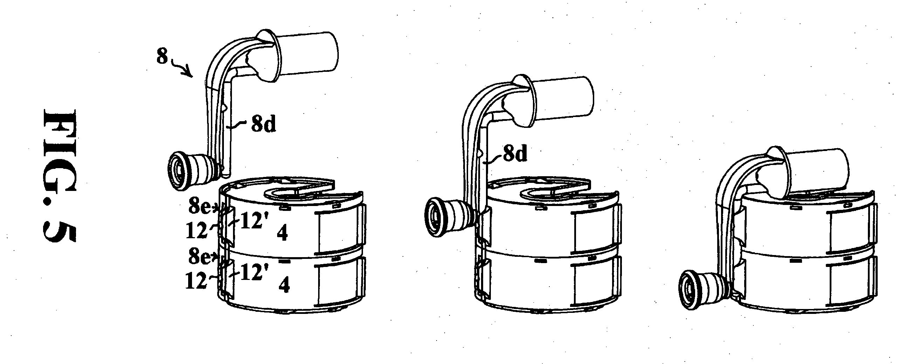

Engaging means (8) are provided in the shown embodiment with an outward protruding part (8b) which can be inserted, see figure 5, into a space (8e) formed by mutually co-acting protruding parts (12,12') provided on a drum, see figure 4. The engaging means (8), in this case together with winding core (3), can thus be attached to, in this case, two drums, see figure 5. Engaging means (8), in this case the protruding part (8b), thus serve in the shown exemplary embodiment as locking for the coupling, in this case a bayonet coupling, between the drums. A plurality of drums together with engaging means (8) and winding core (3) can thus be easily stowed away together and in orderly manner. The protruding part (8b) and the protruding parts (12,12') can of course also be arranged the other way around, i.e. on respectively a drum and engaging means (8).

A wind-up system according to the invention is inexpensive, simple and user-friendly and therefore suitable for both the private market and the professional market: transport by road or by rail.

It will be apparent that the invention is not limited to the shown exemplary embodiments, but that diverse variants are possible within the scope of the invention. The invention can also be advantageously applied in winding up and storing belt-like objects other than tightening straps.

## Claims

1. Device (1) for winding up and storing a belt-like object, in particular a tightening strap (2), comprising a winding core (3) and a drum (4) which forms a receiving space (5) for the wound belt-like object wherein the drum (4) is provided with a first opening (6a) for passage of the winding core (3) and wherein the drum (4) is also provided with a second opening (6b) for passage of the belt-like object and **characterized in that** the drum (4) is also provided with a third opening (6c) for transverse passage of the belt-like object, the third opening (6c) connecting to the first opening (6a) and also to the second opening (6b).

2. Device as claimed in claim 1, **characterized in that** the drum (4) also comprises a fourth opening (6a') lying opposite the first opening (6a) for passage of the winding core (3) wherein the drum (4) is also provided with a fifth opening (6c') for transverse passage of the belt-like object the fifth opening (6c') connecting to the fourth opening (6a') and also to the second opening (6b).

3. Device as claimed in claim 1 or 2, **characterized in that** the winding core (3) is provided with a slot (7) for attaching a first outer end (2a) of the belt-like object to the winding core (3).

4. Device as claimed in claim 3, **characterized in that** the winding core is also provided with first mutually co-acting parts (10,10') extending along the slot and protruding toward the interior of the winding core for clampingly fixing the first outer end of the belt-like object therebetween.

5. Device as claimed in claim 4, **characterized in that** at least one of the first protruding parts is movable, preferably resiliently, relative to the winding core.

6. Device as claimed in any of the claims 1-5, **characterized in that** the winding core (3) is provided with engaging means (8) for engagement during rotation.

7. Device as claimed in claim 6, **characterized in that** the engaging means are provided with a third outward protruding third part (8d) extending at least along a part of the engaging means which third protruding part can be at least partially inserted into a space (8e) formed by mutually co-acting second protruding parts (12,12') provided for this purpose on the drum.

8. Device as claimed in any of the claims 1-7, **characterized in that** at least one part (4c,4c') of the drum (4) adjacent to the second opening (6b) is movable, preferably resiliently, relative to the rest of the drum (4).

9. Device as claimed in any of the claims 1-8, **characterized in that** the drum is provided with coupling means (11) for mutually coupling two or more of such drums.

10. Device as claimed in claim 9, **characterized in that** the coupling means comprise protrusions (11') and slots (11") which, together with such protrusions and slots provided on another such drum, form a bayonet coupling.

11. Method for winding up and storing a belt-like object, in particular a tightening strap (2), by means of a device as claimed in any of the foregoing claims, **characterized by** attaching a first outer end (2a) of the belt-like object to the winding core (3) outside the drum (4) and subsequently inserting the winding core (3) into the receiving space (5) through the first opening (6a) wherein the belt-like object is inserted transversely through the third opening (6c) into the receiving space (5), and then winding the belt-like object onto the winding core (3) wherein the belt-like object is carried longitudinally through the second opening (6b) into the receiving space (5).

12. Method as claimed in claim 11, **characterized in that** the first outer end of the belt-like object is attached to the winding core by insertion thereof into a slot (7) arranged for this purpose in the winding core.

13. Method as claimed in any of the claims 11-12, **characterized in that** the winding core (3) is then taken out of the receiving space (5) via the first opening (6a) wherein the wound belt-like object remains behind in the receiving space (5).

14. Method as claimed in any of the claims 11-13, **characterized in that** two or more such drums are mutually coupled for which purpose the drum is provided with coupling means (11).

15. Method as claimed in any of the claims 11-14, **characterized in that** the method also comprises of subsequently taking the wound belt-like object out of the receiving space via the second opening wherein at least one part (4c,4c') of the drum adjacent to the second opening is moved relative to the rest of the drum, which at least one part is for this purpose movable, preferably resiliently, relative to the rest of the drum.

## Patentansprüche

1. Vorrichtung (1) zum Aufrollen und Lagern eines gurtförmigen Gegenstandes, insbesondere eines Spanngurtes (2), umfassend einen Wickelkern (3) und eine Trommel (4), die einen Aufnahmeraum (5) für den aufgewickelten gurtförmigen Gegenstand ausbildet, wobei die Trommel (4) mit einer ersten Öffnung (6a) für den Durchtritt des Wickelkernes (3) versehen ist und wobei die Trommel (4) auch mit einer zweiten Öffnung (6b) für den Durchtritt des gurtförmigen Gegenstandes versehen ist, **dadurch gekennzeichnet, dass** die Trommel (4) auch mit einer dritten Öffnung (6c) für den Querdurchtritt des gurtförmigen Gegenstandes versehen ist, wobei die dritte Öffnung (6c) mit der ersten Öffnung (6a) und auch der zweiten Öffnung (6b) verbunden ist.

2. Vorrichtung gemäß Anspruch 1, **dadurch gekennzeichnet, dass** die Trommel (4) auch eine vierte Öffnung (6a') umfasst, die gegenüber der ersten Öffnung (6a) für den Durchtritt des Wickelkernes (3) liegt, wobei die Trommel (4) auch mit einer fünften Öffnung (6c') für den Querdurchtritt des gurtförmigen Gegenstandes versehen ist, wobei die fünfte Öffnung (6c') mit der vierten Öffnung (6a') und auch der zweiten Öffnung (6b) verbunden ist.

3. Vorrichtung gemäß Anspruch 1 oder Anspruch 2, **dadurch gekennzeichnet, dass** der Wickelkern (3) mit einem Schlitz (7) zum Befestigen eines ersten äußeren Endes (2a) des gurtförmigen Gegenstandes an dem Wickelkern (3) versehen ist.

4. Vorrichtung gemäß Anspruch 3, **dadurch gekennzeichnet, dass** der Wickelkern auch mit ersten miteinander zusammenwirkenden Teilen (10, 10') versehen ist, die sich entlang des Schlitzes erstrecken und zu dem Innenbereich des Wickelkerns vorstehen, um das erste äußere Ende des gurtförmigen Gegenstandes dazwischen klemmend zu befestigen.

5. Vorrichtung gemäß Anspruch 4, **dadurch gekennzeichnet, dass** mindestens eines der ersten vorstehenden Teile relativ zu dem Wickelkern beweglich, vorzugsweise elastisch beweglich, ist.

6. Vorrichtung gemäß einem der Ansprüche 1 bis 5, **dadurch gekennzeichnet, dass** der Wickelkern (3) mit Verbindungsmitteln (8) zum Verbinden während einer Drehbewegung versehen ist.

7. Vorrichtung gemäß Anspruch 6, **dadurch gekennzeichnet, dass** die Verbindungsmittel mit einem dritten nach außen vorspringenden Teil (8d) versehen sind, das sich zumindest entlang eines Teils der Verbindungsmittel erstreckt, wobei das dritte vorspringende Teil mindestens teilweise in einen Raum (8e) eingebracht werden kann, der durch zweite miteinander zusammenwirkende vorspringende Teile (12, 12') gebildet wird, die zu diesem Zweck an der Trommel vorgesehen sind.

8. Vorrichtung gemäß einem der Ansprüche 1 bis 7, **dadurch gekennzeichnet, dass** mindestens ein Teil (4c, 4c') der Trommel (4) neben der zweiten Öffnung (6b) relativ zu dem Rest der Trommel (4) beweglich ist, vorzugsweise elastisch beweglich.

9. Vorrichtung gemäß einem der Ansprüche 1 bis 8, **dadurch gekennzeichnet, dass** die Trommel mit Kupplungsmitteln (11) zum gegenseitigen Kuppeln zweier oder mehrerer derartiger Trommeln versehen ist.

10. Vorrichtung gemäß Anspruch 9, **dadurch gekennzeichnet, dass** die Kupplungsmittel Vorsprünge (11') und Schlitze (11") aufweisen, die gemeinsam mit derartigen Vorsprüngen und Schlitzen, mit denen andere Trommeln versehen sind, eine Bajonettkupplung ausbilden.

11. Verfahren zum Aufwickeln und Lagern eines gurtförmigen Gegenstandes, insbesondere eines Spanngurtes (2), mittels einer Vorrichtung gemäß einem der vorhergehenden Ansprüche, **gekennzeichnet durch** das Befestigen eines ersten äußeren Endes (2a) des gurtförmigen Gegenstandes an dem Wickelkern (3) außerhalb der Trommel (4) und nachfolgendem Einführen des Wickelkerns (3) in den Aufnahmeraum (5) **durch** die erste Öffnung (6a), wobei der gurtförmige Gegenstand quer **durch** die dritte Öffnung (6c) in den Aufnahmeraum (5) eingeführt wird und anschließendem Aufwickeln des gurtförmigen Gegenstandes auf dem Wickelkern (3), wobei der gurtförmige Gegenstand längs **durch** die zweite Öffnung (6b) in den Aufnahmeraum (5) geführt wird.

12. Verfahren gemäß Anspruch 11, **dadurch gekennzeichnet, dass** das erste äußere Ende des gurtförmigen Gegenstandes an dem Wickelkern befestigt wird, indem dieses in einen Schlitz (7) eingeführt wird, der zu diesem Zweck in dem Wickelkern vorgesehen ist.

13. Verfahren gemäß einem der Ansprüche 11 bis 12, **dadurch gekennzeichnet, dass** der Wickelkern (3) dann über die erste Öffnung (6a) aus dem Aufnahmeraum (5) herausgenommen wird, wobei der aufgewickelte gurtförmige Gegenstand in dem Aufnahmeraum (5) zurückbleibt.

14. Verfahren gemäß einem der Ansprüche 11 bis 13, **dadurch gekennzeichnet, dass** zwei oder mehr solcher Trommeln miteinander verbunden werden, wozu die Trommel mit Kupplungsmitteln (11) versehen ist.

15. Verfahren gemäß einem der Ansprüche 11 bis 14, **dadurch gekennzeichnet, dass** das Verfahren auch den Schritt des nachfolgenden Herausnehmen des aufgewickelten gurtförmigen Gegenstandes aus dem Aufnahmeraum durch die zweite Öffnung umfasst, wobei zumindest ein Teil (4c, 4c') der Trommel, der neben der zweiten Öffnung angeordnet ist, relativ zu dem Rest der Trommel bewegt wird, wobei das zumindest eine Teil zu diesem Zweck relativ zu dem Rest der Trommel beweglich, vorzugsweise elastisch beweglich, ist.

## Revendications

1. Dispositif (1) pour enrouler et stocker un objet de type courroie, en particulier une sangle de serrage (2), comprenant un noyau d'enroulement (3) et un tambour (4) qui forme un espace de réception (5) pour l'objet de type courroie enroulé, le tambour (4) étant pourvu d'une première ouverture (6a) pour le passage du noyau d'enroulement (3) et le tambour (4) étant également pourvu d'une seconde ouverture (6b) pour le passage de l'objet de type courroie, **caractérisé en ce que** le tambour (4) est également pourvu d'une troisième ouverture (6c) pour le passage transversal de l'objet de type courroie, la troisième ouverture (6c) étant reliée à la première ouverture (6a) ainsi qu'à la deuxième ouverture (6b).

2. Dispositif selon la revendication 1, **caractérisé en ce que** le tambour (4) comprend également une quatrième ouverture (6a') située à l'opposé de la première ouverture (6a) pour le passage du noyau d'enroulement (3), le tambour (4) étant également pourvu d'une cinquième ouverture (6c') pour le passage transversal de l'objet de type courroie, la cinquième ouverture (6c') étant reliée à la quatrième ouverture (6a') ainsi qu'à la deuxième ouverture (6b).

3. Dispositif selon la revendication 1 ou la revendication 2, **caractérisé en ce que** le noyau d'enroulement (3) est pourvu d'une fente (7) pour fixer une première extrémité extérieure (2a) de l'objet de type courroie sur le noyau d'enroulement (3).

4. Dispositif selon la revendication 3, **caractérisé en ce que** le noyau d'enroulement est également pourvu de premières pièces coopérant mutuellement (10, 10') qui s'étendent le long de la fente et qui saillent vers l'intérieur du noyau d'enroulement en vue de fixer entre elles par serrage la première extrémité extérieure de l'objet de type courroie.

5. Dispositif selon la revendication 4, **caractérisé en ce qu'**au moins un des premiers éléments saillants est mobile par rapport au noyau d'enroulement, de préférence de façon élastique.

6. Dispositif selon l'une des revendications 1 à 5, **caractérisé en ce que** le noyau d'enroulement (3) est pourvu de moyens d'engagement (8) pour un engagement lors de la rotation.

7. Dispositif selon la revendication 6, **caractérisé en ce que** les moyens d'engagement sont pourvus d'une troisième pièce saillant vers l'extérieur (8d) qui s'étend au moins le long d'une partie des moyens d'engagement, laquelle troisième pièce saillante peut être insérée au moins partiellement dans un espace (8e) formé par des secondes pièces saillantes coopérant mutuellement (12, 12') qui sont prévus dans ce but sur le tambour.

8. Dispositif selon l'une des revendications 1 à 7, **caractérisé en ce qu'**au moins une partie (4c, 4c') du tambour (4) adjacente à la deuxième ouverture (6b) est mobile par rapport au reste du tambour (4), de préférence de façon élastique.

9. Dispositif selon l'une des revendications 1 à 8, **caractérisé en ce que** le tambour est pourvu de moyens de couplage (11) pour le couplage mutuel de deux ou plus tels tambours.

10. Dispositif selon la revendication 9, **caractérisé en ce que** les moyens de couplage présentent des saillies (11') et des fentes (11") qui forment, avec de telles saillies et fentes prévues sur d'autres tambours, un couplage à baïonnette.

11. Procédé pour enrouler et stocker un objet de type courroie, en particulier une sangle de serrage (2), au moyen d'un dispositif selon l'une des revendications précédentes, **caractérisé par** la fixation d'une première extrémité extérieure (2a) de l'objet de type courroie sur le noyau d'enroulement (3) à l'extérieur du tambour (4), suivi de l'insertion du noyau d'enroulement (3) dans l'espace de réception (5) à travers la première ouverture (6a), l'objet de type courroie étant introduit transversalement à travers la troisième ouverture (6c) dans l'espace de réception (5), puis l'enroulement de l'objet de type courroie autour du noyau d'enroulement (3), l'objet de type courroie étant amené longitudinalement à travers la seconde ouverture (6b) dans l'espace de réception (5).

12. Procédé selon la revendication 11, **caractérisé en ce que** la première extrémité extérieure de l'objet de type courroie est fixée sur le noyau d'enroulement en insérant celle-ci dans une fente (7) prévue à cet effet dans le noyau d'enroulement.

13. Procédé selon l'une des revendications 11 à 12, **caractérisé en ce que** le noyau d'enroulement (3) est ensuite sorti de l'espace de réception (5) à travers la première ouverture (6a), l'objet de type courroie enroulé restant dans l'espace de réception (5).

14. Procédé selon l'une des revendications 11 à 13, **caractérisé en ce que** deux ou plus de ces tambours sont couplés mutuellement les uns aux autres, les tambours étant munis à cet effet de moyens de couplage (11).

15. Procédé selon l'une des revendications 11 à 14, **caractérisé en ce que** le procédé comprend l'extraction subséquente de l'objet de type courroie de l'espace de réception par le biais de la seconde ouverture, au moins une partie (4c, 4c') du tambour adjacente à la seconde ouverture étant déplacée par rapport au reste du tambour, la au moins une partie étant dans ce but mobile par rapport au reste du tambour, de préférence de façon élastique.
